# EUROPEAN PATENT SPECIFICATION

(11) **EP 0 677 668 B1**
(45) Date of publication and mention of the grant of the patent: **14.01.1998**
(21) Application number: 95300611.1
(22) Date of filing: 31.01.1995
(51) Int. Cl.: F16B 37/12

(54) **Improvements relating to fasteners**
Verbesserungen an Befestigungelementen
Améliorations se rapportant aux éléments de fixation

(30) Priority: 18.02.1994 GB 9403132
(43) Date of publication of application: 18.10.1995
(73) Proprietor: McKechnie UK Limited, Willenhall, West Midlands WV13 2JS (GB)
(72) Inventor: Cooper, Paul, Tividale, Warley, West Midlands B69 1UD (GB)
(74) Representative: Hands, Horace Geoffrey

(56) References cited:
- EP-A- 0 437 932
- FR-A- 2 135 470
- GB-A- 1 482 074
- US-A- 3 498 353

## Description

This invention relates to screw threaded fasteners.

It is known to provide a re-usable metal female screw-thread in a plastics, composition or wood component by inserting a female threaded metal bush in a bore in the component. One well known system has the bush slotted diametrically from one end towards the other over the majority of its length, so as to provide a pair of legs. The bush can be narrowed at the one end and made generally tapered by closing the legs together so that they touch at the one end, and this facilitates insertion of the narrowed end into the bore before the bush is pressed home. A bolt is screw-threadedly engaged in the bush and as it is rotated and advanced, the tip of the bolt forces the legs apart, back to the parallel position. Projections provided on the exterior of the legs may be forced into the wall of the bore in part by the insertion and pressing home, and also by the separation of the legs back to the parallel position to engage with the wall of the bore and secure the bush in place.

FR-A-2135470 is an example of the bush referred to in the preceding paragraph in which the projections on the exterior of the legs comprise a series of close packed fins, the series extending from the free end of the slotted portion towards an enlarged diameter head, the two fins adjacent the free end being plain and the remainder being peripherally toothed.

GB-A-1482074 shows a fastener intended to work on the same general principal, provided with a series of close spaced frusto-conical, peripherally toothed fins, with a plain pilot portion at the open end of the diametric slots. In this case the fastener is unheaded.

According to the invention a bush for insertion in a plastics, composition, or wood component so as to provide a re-usable metal female screwthread therein, comprises a body and an enlarged diameter head at one end of the body, said body and head being provided with a through bore having a female screwthread formed therein; a pair of parallel sided slots located diametrically of the bush and extending from the free end of the body towards said head over a majority of the length of the bush so as to provide a pair of legs; a series of fins provided along the length of said body externally thereof, all of the fins encircling the body and lying in parallel planes normal to the axis of the bush, all of the fins having an upper surface adjacent the head which is planar and normal to the bush axis, and a lower face which is frusto-conical, and those fins nearest to the head being formed with peripheral teeth, said head being axially splined to provide further teeth on its outer periphery, and the head and adjacent fin being of the same diametric dimension,
characterised in that the fins are all regularly spaced from one another along the length of the body and are also spaced from the head and from the free end of the body, and in that the untoothed fins are of smaller diameter than the toothed fins.

One presently preferred embodiment of the invention is now more particularly described with reference to the accompanying drawing wherein the sole view is an elevation.

In the drawing, the bush 10 may be made of brass or aluminium alloy for example, and comprise a generally tubular body slit diametrically by a pair of parallel sided slots 12 extending from a first free end 14 towards the opposite end or head 16 so as to form a pair of legs 15,17.

The head includes a knurled cylindrical portion 18 and in this embodiment the slots extend slightly into that knurled portion as illustrated.

Along the length of the fastener is a series of encircling fins 20-32 which are substantially equispaced. The lowermost fin, that nearest the end 14, is spaced from the lower end to provide an unfinned pilot portion 40. All of the fins have a planar face adjacent the head 16 and the lower faces are bevelled, that is to say they are of shallow frusto-conical shape and typically make an acute angle of the order of 30 degrees to the planar face.

Both of the fins 30-32 are of the same diameter and of the same diameter as the knurled head 18. The fins 20-28 are smaller in diameter. The body portion which is provided with the fins in order to form the legs is likewise of uniform diameter along its length, and the insertion step involves providing a parallel sided bore of suitable length, and the diameter of the bore in the component will be a slight clearance relative to the root diameter of the body portion, i.e. excluding the fins.

At least one of the fins is knurled. Preferably two 30,32 are knurled, as illustrated, and also preferably the knurl number i.e. the number of teeth provided by the knurling operation is identical on the fins to that on the head. A preferred manufacturing process involves turning a bar on an automatic machine to profile form the fastener and then advancing a knurling wheel into contact with the fins and the head so as to form all of the knurled teeth simultaneously in alignment.

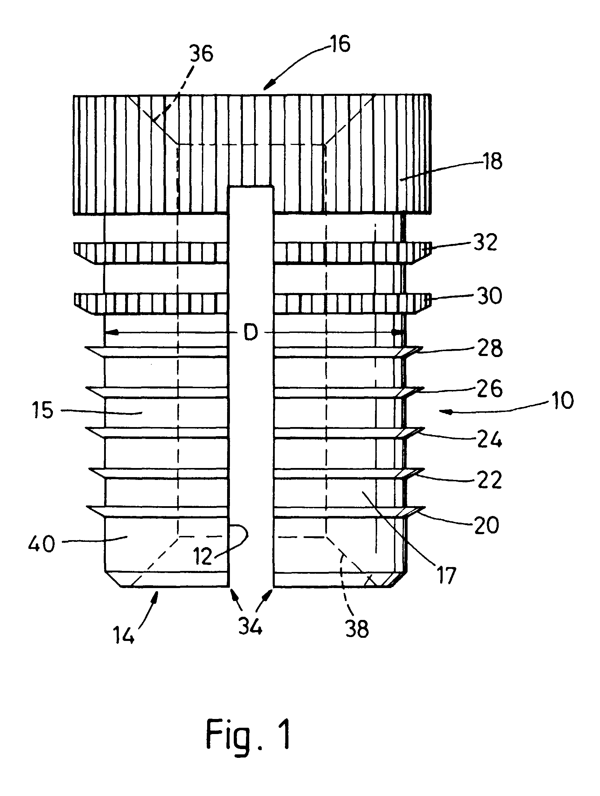

Alternatively all of the fins 20-32 may be made to the same diameter before the knurling. The fins 30,32 will increase in diameter in the knurling step as metal is forced to flow outwardly to make a series of teeth or ribs. Hence, Figure 1 may illustrate a bush made from a semi-finished blank having all the fins of the same size.

The knurled fins may be the same axial thickness as the unknurled fins, or possibly may be made thicker. The knurled fins may also be bevelled at the 30 deg. or other angle.

The bush or fastener is bored throughout and screw tapped, and the bore is countersunk at 36,38 at respective ends.

For installation, the legs are closed together until the points 34 contact one another. The width of the slot is sufficient to ensure that the pilot portion 40 and at least the lowermost fin 20 will then sit in the preformed bore in the component. The bush may be pressed into the component by a machine or even, in small scale manufacture, by a hammer blow. The pressing operation continues until the top end 16 is flush with the surface of the component so as to ensure that the knurl 18 is embedded in the material. Up to this point the legs remain closed together as stated. In this step the fins have a ratchet-like action through the material of the component, becoming part-embedded in the wall. Then, a bolt or other male screw-threaded component is engaged in the bore of the bush, which may be the anchor bolt which fixes another component in place, and as this advances along the length of the screw tapped bore in the bush it forces the legs apart and completely embeds the fins in the wall of the bore.

The use of a 30 deg. or like bevel on the underside of the fins facilitates entry of the bush as it is pushed into the workpiece especially when hand installed rather than machine installed. The pilot portion is particularly useful in hand installation to ensure correct location. The provision of the planar face on the fins provides maximum resistance to pullout of the installed bush. The knurling on the head and fins provides torque resistance, that is resistance to turning.

## Claims

1. A bush (10) for insertion into a plastics, composition, or wood component so as to provide a re-usable metal female screwthread therein, comprising a body (15) and an enlarged diameter head (18) at one end of the body, said body and head being provided with a through bore having a female screwthread formed therein; a pair of parallel sided slots located diametrically of the bush and extending from the free end of the body towards said head over a majority of the length of the bush so as to provide a pair of legs; a series of fins provided along the length of said body externally thereof, all of the fins encircling the body and lying in parallel planes normal to the axis of the bush, all of the fins having an upper surface adjacent the head which is planar and normal to the bush axis, and a lower face which is frusto-conical, and those fins (30 32) nearest to the head being formed with peripheral teeth, said head being axially splined to provide further teeth on its outer periphery, and the head and adjacent fin being of the same diametric dimension,
characterised in that the fins (20-32) are all regularly spaced from one another along the length of the body and are also spaced from the head and from the free end of the body, and in that the untoothed fins (20-28) are of smaller diameter than the toothed fins (30-32).

## Patentansprüche

1. Hülse (10) zur Herstellung eines wiederverwendbaren Innengewindes aus Metall durch Einsetzen in Kunststoff-, Verbundmaterial- oder Holzbauteile, enthaltend einen Körper (15) und, an einem Ende des Körpers, ein Kopfstück (18) mit größerem Querschnitt, wobei der Körper und das Kopfstück mit einer Durchgangsbohrung mit darin ausgeformtem Innengewinde versehen sind; weiterhin enthaltend ein Paar Schlitze mit parallel verlaufenden Seiten, die an einander diametral gegenüberliegenden Seiten der Hülse vorgesehen sind und sich derart vom freien Ende des Körpers bis zum Kopfstück über einen Großteil der Länge der Hülse erstrecken, daß ein Paar von Armen entsteht; sowie eine Reihe von Rippen, die über die Länge des Körpers an dessen Außenseite angeordnet sind, kreisförmig um den Körper herum verlaufen und jeweils in zueinander parallelen, senkrecht zur Achse der Hülse verlaufenden Ebenen liegen, wobei alle Rippen zum Kopfstück hin eine obere, ebene Fläche aufweisen, die senkrecht zur Achse der Hülse verläuft, sowie eine untere, stumpfkegelig abgeschrägte Fläche und wobei die dem Kopfstück am nächsten liegenden Rippen (30, 32) gezahnte Ränder besitzen und das Kopfstück an seinem äußeren Rand mit axialen Kerben versehen ist und wobei das Kopfstück und die angrenzende Rippe dieselben diametralen Abmessungen aufweisen,
dadurch gekennzeichnet, daß die Rippen (20 bis 32) alle über die Länge des Körpers hin mit demselben Abstand zueinander und auch mit Abstand zum Kopfstück und zum freien Ende des Körpers angeordnet sind und daß die nicht gezahnten Rippen (20 bis 28) einen geringeren Durchmesser aufweisen als die gezahnten Rippen (30, 32).

## Revendications

1. Douille (10) à introduire dans un composant en matière plastique, en matériau composite ou en bois, pour ménager à l'intérieur de celui-ci un taraudage métallique femelle réutilisable, comprenant un corps (15) et une tête de plus grand diamètre (18) à une extrémité du corps, le dit corps et la dite tête étant pourvus d'un alésage traversant à l'intérieur duquel est formé un taraudage femelle ; deux fentes latérales parallèles disposées diamétralement sur la douille et s'étendant à l'extrémité libre du corps vers la dite tête sur la majeure partie de la longueur de la douille de façon à fournir deux jambes ; une série d'ailettes ménagées sur la longueur du dit corps à l'extérieur de celui-ci, toutes ces ailettes entourant le corps et s'étendant dans des plans parallèles perpendiculaires à l'axe de la douille, toutes les ailettes ayant une surface supérieure adjacente à la tête qui est plane et perpendiculaire à l'axe de la douille, et une face inférieure qui est tronconique, et les ailettes (30, 32) les plus proches de la tête présentent des dents périphériques, la dite tête étant moletée axialement pour présenter des dents supplémentaires sur sa périphérie, et la tête et l'ailette qui lui est adjacente ont une même dimension en diamètre, caractérisée en ce que les ailettes (20-32) sont toutes régulièrement espacées les unes des autres sur la longueur du corps et sont aussi écartées de la tête et de l'extrémité libre du corps, et en ce que les ailettes non dentées (20-28) sont d'un diamètre inférieur à celui des ailettes dentées (30-32).
